# EUROPÄISCHE PATENTSCHRIFT

(11) **EP 1 056 894 B1**
(45) Veröffentlichungstag und Bekanntmachung des Hinweises auf die Patenterteilung: **11.12.2002**
(21) Anmeldenummer: 99904828.3
(22) Anmeldetag: 29.01.1999
(51) Int. Cl.: D03D 1/00, B60R 21/18

(54) **AUFBLASBARES GURTBAND**
INFLATABLE BELT STRAP
SANGLE GONFLABLE

(30) Priorität: 04.02.1998 DE 19804378; 15.05.1998 DE 19821996; 26.06.1998 US 105054
(43) Veröffentlichungstag der Anmeldung: 06.12.2000
(73) Patentinhaber: Berger, Johann, D-73553 Alfdorf (DE)
(72) Erfinder: BERGER, Johann, D-73553 Alfdorf (DE); MÄRTZ, Josef, D-85386 Eching (DE)
(74) Vertreter: Fischer, Matthias, Dipl.-Ing.
(86) Internationale Anmeldenummer: EP9900605
(87) Internationale Veröffentlichungsnummer: WO99040247

(56) Entgegenhaltungen:
- EP-A- 0 366 518
- WO-A-98/51542
- AT-B- 300 591
- DE-A- 2 008 048
- DE-A- 3 714 088
- DE-A- 4 305 291

## Beschreibung

Die Erfindung betrifft ein zweilagiges aufblasbares Gurtband, insbesondere für einen Sicherheitsgurt.

Wird im folgenden von "Band" oder "Gurtband", "Gurt" oder "Sicherheitsgurt" gesprochen, so ist im wesentlichen immer dasselbe gemeint: es handelt sich stets um Materialien oder Halbzeuge zur Verwendung bei der Fertigung von Sicherheitsgurten, -bändern und einbaufertigen Komponenten von Passagierrückhaltesystemen für Kraftfahrzeuge, Flugzeuge und Schiffe. Dies gilt in gleicher Weise auch für die Begriffe "Schlauch" bzw. "Gewebe".

Die DE-PS 20 08 048 lehrt ein Gurtband, bei dem der dort gezeigte Gurt als Schlauch ausgebildet ist und eine eingenähte Reißfalte aufweist, die so ausgebildet ist, daß sie bei einer Kollision durch vom Gurt ausgeübte Zugkräfte aufreißt und das Öffnen eines damit gekoppelten Ventils das Aufblasen des Schlauchgurtes bewirkt. Hierdurch wird der vor dem Unfall als Flachschlauch liegende Gurt, dessen Breite dem halben Umfang des aufgeblasenen Gurtes entspricht, schlagartig aufgeblasen. Er stellt dadurch ein gewisses, gegenüber dem einfachen Gurt vorteilhaftes. Aufprallkissen dar. Ein ausreichender Schutz des Fahrzeugpassagiers ist jedoch aufgrund der unbedeutenden Ausmaße des aufgeblasenen Schlauchgurtes nicht zufriedenstellend gewährleistet. Eine ebenfalls in der zitierten Schrift genannte Vergrößerung des Gurtschlauchumfanges mit einem aufblasbaren Kissen, welches in einem Gurtteil um den Gurt herum angeordnet ist. ist ebenfalls nachteilig, da sich das entsprechende Kissen im Notfall nicht unbedingt an der richtigen Stelle befindet und somit für seinen eigentlichen Zweck nicht zur Verfügung steht.

Die AT-B-300 591 zeigt einen Sicherheitsgurt mit einem oder mehreren aufblasbaren Hohlkörpern, der dadurch gekennzeichnet ist, daß er im leeren Zustand um seine Längsachse faltbar ist. Es wird ein Gurthohlkörper gezeigt, der aufgrund seines voluminösen Gewebes sehr stark aufträgt und für eine komfortable Handhabung durch den Passagier völlig ungeeignet ist.

Die DE-OS 37 14088 offenbart ein Gurtband für ein Rückhaltesystem in einem Fahrzeug, wobei an dem Gurtband ein aufblasbarer Luftschlauch über einen Zwischenträger oder eine Klebeverbindung angebracht ist Der Gurt selbst weist, sich in Gurtlängsrichtung erstreckende, Zonen unterschiedlicher Arbeitsaufnahme (unterschiedliche Dehnungseigenschaften quer zur Bandbreite) auf, die einerseits zur Energievernichtung oder Arbeitsaufnahme im Belastungsfall dienen und andererseits durch gezielte Auswahl örtlich unterschiedliche Dehnungseigenschaften des Bandes erreichen, daß sich die Ränder des Bandes im Belastungsfall so einwölben, daß sie sich von der zu schützenden Person weg bewegen, wodurch der bekannte Einschneideeffekt eines Gurtes im Belastungsfall auf den Körper der zu schützenden Person wesentlich reduziert wird. Die hier beschriebene Anordnung eines Gurtbandes mit Bereichen zur Arbeitsaufnahme und Mitteln zur Vergrößerung der Auflagefläche des Gurtbandes (aufblasbarer Luftschlauch) ist sehr aufwendig und hat sich aufgrund der Mehrteiligkeit der Anordnung auch wegen der hohen Herstellungskosten nicht durchgesetzt.

Aus der internationalen Anmeldung PCT/S 95/10695 ist ein aufblasbares schlauchförmiges Rückhaltesystem bekannt. Das hier gezeigte Sicherheitsgurtsystem besteht aus einem Beckengurt und einem Schultergurt, wobei der Beckengurt bereichsweise aus einem aufblasbaren Ballon besteht, der während des Aufblasens seine Länge verkürzt und damit neben einer Aufprallfunktion auch eine Gurtstrafffünktion hat. Hierbei ist zwar der Bauchraum des Passagiers besonders geschützt, der Schulter- und Kopfbereich jedoch, außer einer zusätzlichen Rückhaltung der Schulter durch den gestrafften Gurt, nicht weiter berücksichtigt.

Die DE 43 05 291 As zeigt einen airbagbestückten Sicherheitsgurt in Form von zwei herkömmlichen Gurtbändern, die aus einem möglichst gering dehnbaren, biegeweichen Material bestehen. Zwischen diesen beiden Gurtbändern befinden sich gefaltete Verbindungselemente an beiden Außenkanten. Im Ausgangszustand wird die gesamte Anordnung beispielsweise durch Reißnähte derart zusammengehalten, daß sie eine möglichst geringe Dicke aufweist. Die Gurtbander und Verbindungselemente sollen zwar in Endlosfertigung gefertigt werden, sind jedoch in zusätzlichen kostenträchtigen Verfahrensschritten miteinander zu verbinden.

Es ist eine Aufgabe der Erfindung, einen Gurt bzw. ein Gurtband der eingangs genannten Art und eine Verfahren zu dessen Herstellung zu schaffen, das weitgehend unbegrenzt, d.h. auch möglichst ortsunabhängig, in einer Unfallsituation optimalen Aufprallschutz für einen Passagier gewährleistet und kostengünstig herzustellen ist.

Diese Aufgabe wird gelöst mit einem zweilagigen aufblasbaren Gurtband, das dadurch gekennzeichnet ist, daß es als schlauchförmiges Gurtband mit zwei Weblagen, nämlich einer oberen Weblage und einer unteren Weblage gewebt ist, daß die Gesamtbruchlast der Kettfäden in mittleren, etwa die Breite eines herkömmlichen Gurtbandes einnehmenden Bereichen der beiden Weblagen des Gurtbandes derjenigen der Kettfäden eines herkömmlichen (Sicherheitsgurt-)Gurtbandes entspricht, daß die Kettfäden der an die mittleren Bereiche anschließenden Randbereiche und die Schußfäden des Gurtbandes feiner als die Kettfäden in den mittleren Bereichen sind, daß das Gewebe der an die mittleren Bereiche anschließenden Randbereiche um parallel zur Längsrichtung des Gurtbandes verlaufende äußere Faltkanten so gefaltet ist, so daß das Gewebe jeweils zwischen den mittleren Bereichen der oberen und der unteren Weblage zu liegen kommt, und daß die mittleren Bereiche der oberen Weblage und der unteren Weblage im den äußeren Faltkanten benachbarten Bereich miteinander lösbar verbunden ist.

Durch die Herstellung des Gurtbandes als gewebtes Schlauchgurtband, das als Endlosband mit zwei Weblagen hergestellt wird, wobei die Gesamtbruchlast ausgewählter Kettfäden der Gesamtbruchlast der Kettfäden eines herkömmlichen gewebten Gurtbandes entspricht, erübrigt sich das sehr kostenintensive Verbinden von endlosem Gurtmaterial mit endlosem Airbagmaterial durch Zusammennähen, -heften oder -schweißen. Die Herstellung eines Gurtbandes auf einer Bandwebmaschine mit Umkehrschuß oder einer Breitwebmaschine (mit gewebter Naht) ermöglicht eine äußerst wirtschaftliche Endlosproduktion des erfindungsgemäßen Gurtbandes und damit auch eine problemlose Ablängung für jeden Verwendungsfall. Eine vorteilhafte Weiterbildung des gewebten Schlauchgurtband besteht darin, daß im Bereich der Faltkanten die Fadenflottungen von Kette und Schuß größer/gleich 2 sind, wodurch sich im Gurtband beim Abknicken entlang der Ränder der mittleren Bereiche weichere Kanten, und somit weiche Gurtbandkanten ergeben, die den Tragekomfort des Gurtes erhöhen und den Verschleiß der Bekleidung des Benutzers verringern.

Die Bruchlast beider, die Zugfunktion von Gurtbändern übernehmenden mittleren Bereiche des erfindungsgemäßen Gurtbandes zusammen entspricht der Bruchlast eines konventionellen Gurtbandes. In - den Seitenkanten benachbarten - Bereichen können die beiden Gurtbänder miteinander mittels jeweils Reißnähten verbunden werden, die im Problemfall aufreißen und die Entfaltung des schlauchförmigen Gewebes ermöglichen. Anstelle von Reißnähten können auch andere Verbindungsarten der leporelloartig aufeinandergefalteten und -gelegten Gewebelagen z. B. durch Heftkleben oder -verschweißen gewählt werden. Diese Ausbildung ist insbesondere deshalb vorteilhaft, da sie auf allen Außenseiten des Gurtbandes ein strapazierfähiges Material anbietet.

Das im Ruhezustand gefaltete aufblasbare Gewebe wird im Problemfall durch schlagartiges Aufblasen z. B. mit herkömmlichen Gasgeneratoreinrichtungen auf seine maximale Schlauchgröße, die an das Volumen eines dem Fachmann bekannten Airbags heranreichen kann, entfaltet und bietet somit optimalen Schutz für den Passagier. Das schlauchförmige Gewebe ist mit einem jeweils gewünschten Schlauchdurchmesser wählbar, der für eine entsprechende ausreichende Abpufferung des Beckens, der Hüfte, der Brust, der Schulter und des Kopfes am zweckmäßigsten ist.

Die Vorteile bestehen insbesondere in einer einteiligen integralen Ausführungsform des Gurtbandes. Zur Erhöhung der Benutzerfreundlichkeit des Gurtbandes kann, um den Verschleiß von Textilien der Fahrgäste zu verringern, an den Seitenkanten des ersten und/oder zweiten Gurtbandes eine Kante aus weichem Material angebracht werden.

Da das erfindungsgemäße Gurtband aufgrund dessen, daß es mehr Material enthält, etwas dicker ist als ein herkömmliches Gurtband, ergibt sich möglicherweise beim Durchlaufen der Schließzunge oder des Aufrollmechanismus der Sicherheitsgurteinrichtung ein Platzproblem. Betreffend die Schließzunge ist hier durch eine eventuelle Erweiterung des Durchgangsschlitzes der Schließzunge sofort Abhilfe geschaffen. Um jedoch eine Vergrößerung des Aufrollmechanismus zu verhindern, kann in vorteilhafter Weise am erfindungsgemäßen Gurtband an der Stelle, die bei aufgerolltem Band kurz vor dem Aufrollmechanismus zur Ruhe kommt, das Gurtband als konventionelles Band weitergeführt werden.

Weitere vorteilhafte Merkmale sind den Unteransprüchen zu entnehmen.

Zur weiteren Erklärung der Erfindung und um zu zeigen, wie sie ausgeführt werden kann, werden nun anhand von Zeichnungen beispielhafte Ausführungsformen der Erfindung beschrieben.
- Fig. 1: zeigt in stark vereinfachter schematischer Darstellung ein Ausführungsbeispiel eines erfindungsgemäßen, noch nicht gefalteten Gurtbandes im Querschnitt.
- Fig. 2: zeigt das gegenüber in Fig. 1 leicht vergrößert dargestellte Gurtband im gefalteten Zustand nach dem Anbringen von Reißnähten.
- Fig. 3: zeigt das in Fig. 2 dargestellte Gurtband zu Beginn der Aufblasphase kurz nach Brechen der Reißnähte.
- Fig. 4: zeigt das in den Figuren 1 bis 3 dargestellte Gurtband, aus Platzgründen gebrochen dargestellt, in vollständig aufgeblasenem Zustand.
- Fig. 5: zeigt eine dem vorhergehenden Ausführungsbeispiel ähnliche Ausführungsform, wobei im Mittelbereich des Gurtbandes Raum für eine Gasversorgungsleitung freigehalten ist.

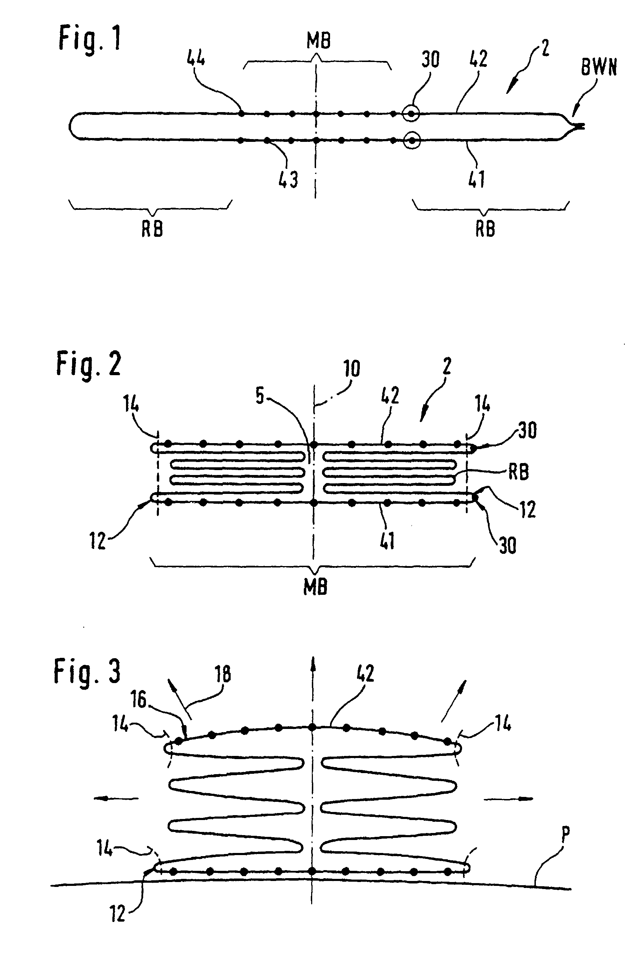

Fig. 1 zeigt im Querschnitt schematisch und stark vereinfacht ein erfindungsgemäßes, noch nicht gefaltetes Gurtband 2, das als schlauchförmiges Gurtband mit zwei Weblagen, nämlich einer oberen Weblage 42 und einer unteren Weblage 41 gewebt ist. Die gesamte Zugkraft übernehmende "dicke" Kettfäden mit einer Fadenstärke von beispielsweise dtex 1100 in mittleren, etwa die Breite eines herkömmlichen Gurtbandes einnehmenden Bereichen MB der beiden Weblagen 41, 42 des Gurtbandes sind durch Punkte 43 und 44 symbolisch angedeutet. Selbstverständlich einholte das erfindungsgemäße Gurtband in jeder Weblage eine wesentlich höhere Anzahl die Gesamtzugkraft im Gurt übernehmende Kettfäden 43, 44 (beispielsweise 180 bis 200). Die Kettfäden an die mittleren Bereiche anschließender Randbereiche RB und die Schußfäden des Gurtbandes sind feiner als die Kettfäden 43, 44 in den mittleren Bereichen. Als sehr zweckmäßige Fadenstärke für die Kettfäden der Randbereiche RB sowie die Schußfäden hat sich beispielsweise dtex 550 erwiesen. Das mit dieser Fadenstärke gewebte Material eignet sich gut zum Falten in den Zwischenraum zwischen den mittleren Bereichen MB der Weblagen 41 und 42 (Fig. 2) und hat sich auch als Luftsackgewebe bewährt. Vorzugsweise laufen Ketten und Schuß in den mittleren Bereichen MB flottierend, wobei die Fadenflottungen größer/gleich zwei verlaufen. Es ergibt sich in vorteilhafter Weise ein sehr günstiges Herstellungsverfahren eines erfindungsgemäßen Gurtbandes als Schlauchgewebe mit gezielt angeordneten Kettfadenqualitäten, wobei die im Stand der Technik notwendigen Heftungen von Gurtband und Luftsack wegfallen.

Fig. 2 zeigt das erfindungsgemäße Gurtband 2 im Querschnitt, bei dem die Randbereiche RB leporelloartig zwischen die mittleren Bereiche MB gefaltet sind. Die gegenüber der Achse 10 symmetrische Anordnung des Gurtbandes 2 ist in sämtlichen Figuren dieser Beschreibung zu erkennen. Das heißt jedoch nicht unbedingt, daß das erfindungsgemäße Gurtband immer mit symmetrischer Aufteilung gefaltet werden muß. Abhängig von einer bestimmten gewünschten Endform des Schlauchgurtes im aufgeblasenen Zustand kann die eine oder andere unsymmetrische Faltart zweckmäßiger sein.

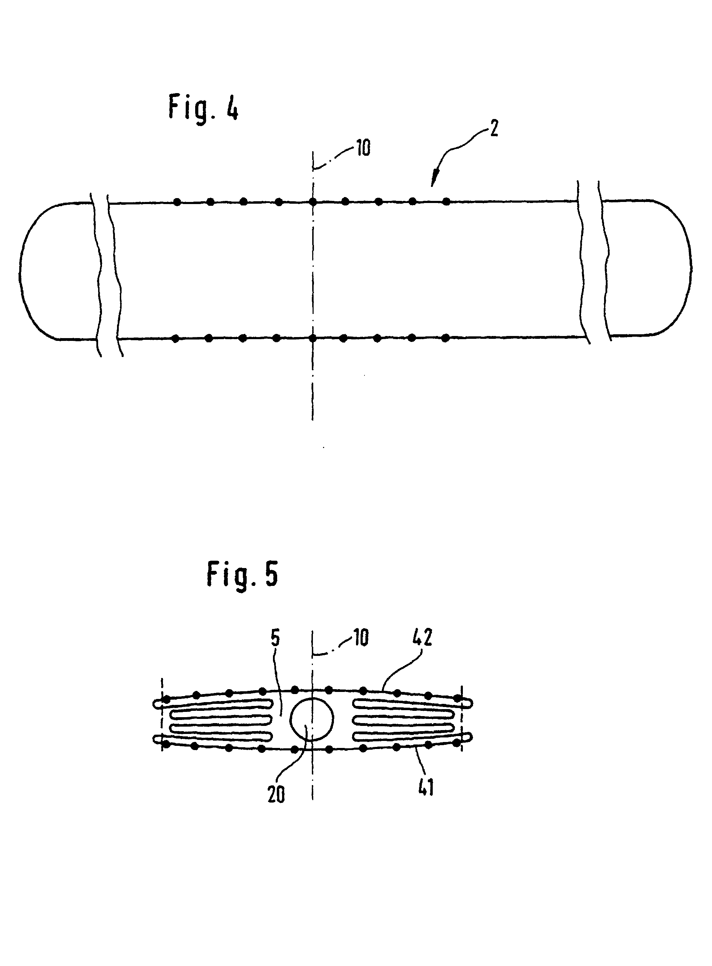

Wie aus Fig. 2 zu erkennen ist, ist das Gewebe der Randbereiche an Seitenkanten 12 um etwa 180° umgeknickt und wird, ausgehend von der oberen Weblage 42, bis etwa zur Mitte (Symmetrieachse 10) des Gurtbandes geführt, wo es wiederum um 180° nach außen gefaltet wird. Bei der wieder nach außen Richtung Seitenkante 12 gehenden Wendung des Gewebes erkennt man, daß die nächste Faltkante etwas weiter innen Richtung Achse 10 zu liegen kommt, da die Faltkante innerhalb der gestrichelt dargestellten Linie die äußeren Schichten verbindender Reißfäden 14 liegen muß. Die hin- und hergehende Faltung des Gewebes in Form eines Leporello setzt sich beiderseits der Symmetrieachse fort bis zur unteren Weblage 41, deren äußere Faltkanten ebensoweit von der Achse 10 entfernt liegen, wie die Seitenkanten 12 unteren Weblage 41. Man erkennt in Fig. 2 etwa im Bereich der Achse 10 einen Innenraum 5 des Gurtbandes, der in der hier gezeigten Darstellung besonders schmal gewählt wurde. Dies ist jedoch abhängig von den Wünschen des Konstrukteurs unterschiedlich handhabbar. Wie später beispielsweise in Fig. 5 dargestellt ist, kann dieser Innenraum 5 nach einer oder auch nach beiden Seiten erweitert ausgebildet sein. Hier sei noch einmal auf die oben angesprochene. auch mögliche unsymmetrische Faltenverlegung des Gewebes hingewiesen.

Fig. 3 zeigt das in den Fig. 1 und 2 dargestellte Gurtband kurz nach Einschuß eines Expansionsgases in den Innenraum 5 des schlauchförmigen Gurtbands. Anhand der kleinen sternförmig angeordneten Pfeile 18 ist theoretisch die Bewegungs- und Expansionsrichtung des Gewebes vorstellbar. Man erkennt, daß die Reste der gebrochenen Reißfäden 14 im Bereich der Seitenkanten der Außenseite 16 und der Seitenkanten 12 lose liegen.

Fig. 4 zeigt den in den Figuren 1, 2 und 3 dargestellten Gurt, gebrochen dargestellt in aufgeblasener Gestalt.

Eine (nicht gezeigte) vorteilhafte Weiterbildung des erfindungsgemäßen Gurtbandes besteht darin, daß die die Gesamtbruchlast des Gurtbandes aufnehmenden Kettfäden in nur einem der mittleren Bereiche MB *einer* Weblage untergebracht sind. Selbstverständlich muß hierfür die erforderliche Anzahl tragfähiger Kettfäden und deren entsprechende Fadenstärke eingesetzt werden. Beispielsweise könnte diese Anordnung, auf Fig. 2 angewendet, so aussehen, daß nur der mittlere Bereich MB der unteren Weblage 41 alle erforderlichen, Zugkraft übernehmenden Kettfäden enthält. Dadurch ergibt sich in der vom Körper P des Passagiers wegzeigenden Weblage 42 ein weicheres Gewebe, das z.B. einen daraufprallenden Kopf des Passagiers weicher und damit besser schützend auffängt.

Fig. 5 zeigt eine Ausführung eines erfindungsgemäßen Gurtbandes mit einem erweiterten Innenraum 5, um einer Gasversorgungsleitung 18 Raum zu geben.

An dieser Stelle soll kurz erwähnt werden, daß der Reißfaden 14 auch ersetzt werden kann durch andere Verbindungsmittel wie Verklebung oder Verschweißung der Randbereiche des schlauchförmigen Gewebes bzw. der Gurte 41, 42 oder eine andere lösbare Verbindungsart. z. B. Ketteln. In Fig. 7 ist das zweite Gurtband 42 ersetzt durch bestimmte Kettfäden 44, die die Längszugkraft des Gurtes 42 übertragen sollen.

Das erfindungsgemäße Gurtband kann auf jedem Sitz eines Fahrzeugs und insbesondere vorteilhaft für Sicherheitsgurte im Fondbereich von Kraftfahrzeugen verwendet werden, nämlich da, wo vor dem Passagiersitz keine geeigneten Örtlichkeiten vorhanden sind, um z. B. einen Airbag herkömmlicher Art einzubauen. Deshalb eignet sich das Gurtband z.B. auch für Sicherheitsgurte in Bussen oder auch Flugzeugen und Tragflächenbooten, eben überall für die Anwendungsfälle, in denen Passagiersitze hintereinander angeordnet sind. Wie bereits erwähnt wurde, wird die eine oder andere Ausführungsform gemäß den speziellen Wünschen des Konstrukteurs zur Realisierung kommen.

In Fig. 1 und 2 ist, auf der rechten Seite angedeutet, eine zusätzliche Kettfadengruppe 30 paariger dünner Kettfäden jeweils an der Seitenkante 12 des Gurtbandes zu erkennen. Ziel dieser Ausführungsform ist eine weichere Gestaltung der Gurtbandkante, die ein Verschleißen der Kleidung des Passagiers verringert.

Ein Gurtband der Erfindung hat den immensen Vorteil, daß es in der Regel problemlos gegen herkömmliche Gurte ausgetauscht werden kann. Sofern im Bereich des automatischen Aufrollmechanismus ein herkömmliches Band an ein erfindungsgemäßes Band angestückt wird, ist als einzige Veränderung an bestehenden Sicherheitssystemen der Bandschlitz in der Schließzunge etwas zu erweitern, um das etwas mehr auftragende erfindungsgemäße Band problemlos hindurchgleiten zu lassen. Selbstverständlich ist für den Fall einer weiterreichenden Schußgasversorgung, etwa durch einen nachträglich eingeschobenen integrierten Schlauch, die Schließzunge dementsprechend noch einmal zu erweitern.

Die Ausbildung von Sicherheitsgurtsystemen mit dem erfindungsgemäßen Gurt erlaubt ein Abfangen des Passagiers in allen Bereichen, in denen der Gurt überhaupt vorhanden ist. Somit werden eigentlich mehrere Airbags herkömmlicher Art mit einem einzigen Mittel, nämlich dem erfindungsgemäßen Gurtband, ersetzt. Es fällt somit weg: der Airbag für den Beckenbereich, für den Bauch und Hüftbereich, für den Brustschutz, das Schlüsselbein und den Schulterbereich sowie der sogenannte Kopfsidebag. Ein unschlagbarer Vorteil des aufblasbaren Gurtbandes gegenüber dem Airbag besteht darin, daß das aufblasbare Gurtband im Falle einer Kollision bereits am Körper des Passagiers anliegt, während sich der Airbag erst mit lautem Knall und teilweise unkontrolliert auf den Passagier zuschießend entwickelt.

Um die Funktion des aufgeblasenen Gurtbandes möglichst lang aufrecht zu erhalten, ist es von großem Vorteil, das erfindungsgemäße Gurtband von innen beispielsweise mit Silicon oder Polyurethan zu beschichten. Eine Beschichtung des schlauchförmigen Gewebes kann auch durch Imprägnieren und/oder Färben erreicht werden, wenn Färbemittel auf spezieller Kunststoffbasis mit dem Gewebe eine entsprechende Verbindung eingehen, so daß es dicht wird.

Wie bereits oben erwähnt wurde, wirkt das Aufblasen des erfindungsgemäßen Gurtbandes auf den bisher nicht möglichen extrem großen Durchmesser gleichzeitig als Gurtstraffer. Insgesamt haben Versuche ergeben, daß der Einsatz des erfindungsgemäßen Gurtbandes spezifische Verletzungen bei Passagieren sehr stark verringert, da die Kraft des Gurtbandes auf den gesamten Körper der Personen verteilt wird. So werden die punktförmigen verletzungsträchtigen Kraftauswirkungen stark verringert. Durch gezielt ausgewählte Luft- bzw. Gasdurchlässigkeit in ausgewählten Bereichen des schlauchförmigen Gewebes wird vorteilhafterweise eine gesteuerte sog. Vorverlagerung und damit auch Belastungsreduzierung erreicht. Der sich nach vorne auf den Gurt zubewegende Passagier kommt mit dem gesteuert erschlaffenden Gurtband in "weicheren" Kontakt. Die Auffangarbeit wird besser verteilt, der Umfang der Verletzungen sinkt. Eine andere vorteilhafte Methode besteht darin, daß das schlauchförmige Gewebe in ausgewählten Bereichen Abblasöffnungen aufweist, die eine ähnliche Wirkung haben.

Eine erfindungsgemäße Weiterbildung des oben geschilderten Gurtbandes besteht auch in der gewebten Ausbildung eines sogenannten One-piece-air-belt. Hierbei kann mit Hilfe eines Jacquardwebstuhls der gesamte Sicherheitsgurt von einem bis zum anderen Ende einstückig gewebt werden. Auf Breitwebmaschinen können mehrere erfindungsgemäße Gurtbänder nebeneinander gewebt werden. Eine dabei entstehende "gewebte" Naht BWN (in Fig. 1, rechte Seite beispielhaft als Alternative gezeigt ) "verschwindet" beim Falten zwischen den mittleren Bereichen MB des Gurtbandes 2, ohne zu stören. Die jeweilig gewünschten Bereiche, z. B. Aufrollbereich, dünnes Band und Schutzbereich, erfindungsgemäßes Gurtband, können hier jeweils individuell nach den Anforderungen des jeweiligen Fahrzeug- oder Flugzeugherstellers berücksichtigt werden. Hierdurch werden, wie bereits oben erwähnt, die Effekte herkömmlicher Side- und Front-Airbags in einem einzigen Sicherheitssystem übernommen. Dies erspart in hohem Maße Herstellungskosten und erhöht nebenher aufgrund der kompakten Kombinationslösung die Sicherheit im Brust- und Kopfbereich entscheidend. Selbstverständlich können sämtliche Merkmale eines One-piece-air-belt an unterschiedliche Körpergrößen (oder -gewichte) von Passagieren angepaßt werden. So wird ein Kinder-Airbelt ebenso gefertigt wie ein Airbelt für sehr große Menschen. Dabei wird eine besondere gewünschte Lage und Anordnung von permeablen Bereichen des Airbelt-Gewebes ebenso berücksichtigt, wie die jeweils gewünschte Länge des Airbelts.

Eine andere vorteilhafte Weiterbildung der Erfindung besteht darin, daß das schlauchförmige Gebilde des Bands, Schlauchs oder Gewebes zur Vereinfachung der Faltenbildung insbesondere bei der Konfektionierung zu einem einbaufertigen Gurtband in ausgewählten Bereichen entlang zur Schlauchlängsachse parallel verlaufender Linien vorgeknickt ist. Die Konfektionierung kann wesentlich schneller vonstatten gehen, da sich das Gurtband "wie von selbst" faltet. Dies führt bei der Endmontage zu wesentlicher Zeitersparnis. Hierbei reicht bereits eine geringe Vorknickung aus.

Zur Herstellung eines derartigen Bands, Schlauchs oder Gewebes wird erfindungsgemäß vorgeschlagen, daß das schlauchförmige Gebilde entlang der Linien über heiße Bügelkanten geführt wird. Zweckmäßigerweise geschieht dies direkt nach der Herstellung des Band-, Schlauch- bzw. Gewebematerials, in einem Zustand also, in dem das Material noch keine Applikationen trägt, also noch relativ einfach handhabbar ist.

Eine ebenso vorteilhafte Variante besteht darin, daß das schlauchförmige Gebilde entlang der Linien gefaltet und heiß gebügelt wird. Dies kann mit einem Bügeleisen im herkömmlich bekannten Verfahren durchgeführt werden. Bei beiden erwähnten Verfahren wird das Material beim Knicken leicht angeschmolzen und kann sich deshalb nach dem Erkalten nicht mehr vollständig aus der Faltung zurückbewegen. Es ergibt sich der Falt-"Hilfseffekt".

Setzt man als Gewebe-, Band- oder Schlauchmaterial ein gewebtes Material ein, ist es von Vorteil, in den ausgewählten Bereichen entlang der geplanten "Bügellinien" eigene hierfür besonders geeignete Kettfäden "einzubauen". Dabei kann das Kettfadenmaterial selbst, dessen Stärke, Kapillarenzahl und/oder -zusammensetzung entsprechend ausgewählt werden. Auch die Bindungsart im betroffenen Bereich kann entscheidend sein.

In einer anderen vorteilhaften Weiterbildung der Erfindung ist das (der) Band, Schlauch oder Gewebe dadurch gekennzeichnet, daß das schlauchförmige Gebilde innen wenigstens bereichsweise mit einer Beschichtung versehen ist. Die bereichsweise Beschichtung dient der Regulierung der Permabilität des Gewebes. Durch nichtbeschichtete Zonen des Gewebes kann das Aufblasgas des Airbelts eher entweichen, als durch beschichtete Zonen. Auch die Lage der nichtbeschichteten Bereiche ist von besonderer Bedeutung: das in der Regel heiße Aufblasgas des Airbelts soll im vom Körper des Passagiers wegzeigenden Bereich entweichen und abströmen, um den Passagier nicht durch das heiße Gas zu verletzen. Auch bei kalten Aufblasgasen ist allein durch dessen Strömungsgeschwindigkeit eine Verletzungsgefahr gegeben.

Hierzu wird erfindungsgemäß auch ein vorteilhaftes Verfahren zur Herstellung eines beschichteten Bands, Schlauchs oder Gewebes vorgeschlagen, das dadurch gekennzeichnet ist, daß das schlauchförmige Gebilde in eine im wesentlichen rohrförmige Kammer gebracht wird, deren Innenkontur etwa der Außenkontur des nicht- bzw. aufgefalteten Gebildes entspricht, wobei die Kammer eine wenigstens bereichsweise gaspermeable Wandung aufweist und in das Gebilde ein ein Beschichtungsmittel tragendes unter einem Druck Pᵢ stehendes Gas eingebracht wird, während auf der Außenseite der Wandung, also außerhalb der Kammer ein Druck Pₐ herrscht, wobei Pᵢ > Pₐ. Die Vorgehensweise ist damit prinzipiell eigentlich schon so beschrieben, daß ein Fachmann das Verfahren durchführen kann. Man kann damit die lokale Permeabilität des Gebildes sehr einfach steuern. Das in der Regel mit einem Lösungsmittel eingebrachte Beschichtungsmittel lagert sich nur in dem Bereich innerhalb des Gebildes an dessen Innenwand ab, dem außen eine gaspermeable Wandung der Kammer gegenüberliegt. Das Gas entweicht an dieser Stelle (an diesen Stellen) aus der Kammer, während es das Beschichtungsmittel (z. B. eine Polyethylenverbindung) beim Entweichen am Gewebe "abstreift". In Bereichen nichtpermeabler Zonen der Kammerwandung findet dagegen keine oder kaum eine Ablagerung des Beschichtungsmittels auf dem Gebilde statt. Diese Bereiche sind beim fertigen Airbelt die aufgrund "fehlender" Beschichtung durchlässigen Bereiche (s.o.). Diese Methode ist selbstverständlich nur bei gasdurchlässigen Geweben anwendbar.

Im vorhergehenden Abschnitt wurde die Beschichtung eines schlauchförmigen Gebildes beschrieben. Es ist ebenso denkbar, das schlauchförmige Gebilde "aufzuschneiden" und als abgewickelte Fläche auf der Innenfläche der gaspermeablen Wandung einer gleichfalls "aufgeschnittenen" Kammer anzuordnen. Die Örtlichkeiten "Innen" und "außen" werden dann z. B. "Oben" und "Unten". Auf die abgewickelte Fläche wird dann analog zur Innenfläche des o.g. Gebildes ein ein Beschichtungsmittel tragendes unter einem Druck Pₒ stehendes Gas gebracht wird. während auf der Außenseite der Wandung (also unten), also außerhalb der Kammer ein Druck Pᵤ herrscht, wobei Pₒ > Pᵤ. Der weitere Vorgang der gezielten Beschichtung ergibt sich analog wie beim zuvor beschriebenen schlauchförmigen Gewebe.

Das Gurtband kann nach dem Webvorgang vor dem Falten beschichtet werden. Vor der Beschichtung ist als Option auch ein Wenden des ungefalteten Gurtbandschlauches nach links denkbar. Danach wird er in die oben erläuterte Leporelloform gebracht.

## Patentansprüche

1. Zweilagiges aufblasbares **einteiliges** Gurtband, insbesondere für einen Sicherheitsgurt, **dadurch gekennzeichnet**,
a) daß es als schlauchförmiges Gurtband (2) mit zwei Weblagen (41, 42), nämlich einer oberen Weblage (42) und einer unteren Weblage (41) gewebt ist,
b) daß die Gesamtbruchlast der **im Belastungsfall die gesamte Gurt-Zugkraft übernehmenden** Kettfäden (43, 44) in mittleren, etwa die Breite eines herkömmlichen Gurtbandes (2) einnehmenden Bereichen (MB) der beiden Weblagen (41, 42) des Gurtbandes (2) derjenigen der Kettfäden eines herkömmlichen (Sicherheitsgurt-) Gurtbandes entspricht,
c) daß die **im wesentlichen keine Gurt-Zugkraft aufnehmenden** Kettfäden der an die mittleren Bereiche (MB) anschließenden Randbereiche (RB) und die Schußfäden des Gurtbandes **wesentlich** feiner als die Kettfäden (43, 44) in den mittleren Bereichen sind,
d) daß das Gewebe der an die mittleren Bereiche (MB) anschließenden Randbereiche (RB) um parallel zur Längsrichtung des Gurtbandes verlaufende äußere Faltkanten so gefaltet ist, so daß das Gewebe jeweils zwischen den mittleren Bereichen der oberen und der unteren Weblage zu liegen kommt, und
e) daß die mittleren Bereiche der oberen Weblage und der unteren Weblage im den äußeren Faltkanten benachbarten Bereich miteinander lösbar verbunden ist

2. Gurtband nach Anspruch 1, **dadurch gekennzeichnet, daß** die Kettfäden der an die mittleren Bereiche anschließenden Randbereiche und die Schußfäden des Gurtbandes etwa halb so stark wie die Kettfäden (43, 44) in den mittleren Bereichen sind.

3. Gurtband nach Anspruch 1 oder 2, **dadurch gekennzeichnet, daß** im Bereich der Faltkanten die Fadenflottungen von Kette und Schuß größer/gleich 2 sind, wodurch sich im Gurtband beim Abknicken entlang der Ränder der mittleren Bereichen weichere Kanten ergeben.

4. Gurtband nach Anspruch 1, 2 oder 3, **dadurch gekennzeichnet, daß** es im Schlauch-Inneren und/oder -Äußeren wenigstens bereichsweise beschichtet ist.

5. Gurtband nach den Ansprüchen 1 bis 4, **dadurch gekennzeichnet, daß** in den mittleren Bereichen besondere Strukturen eingewebt sind.

6. Gurtband nach einem der vorhergehenden Ansprüche, **dadurch gekennzeichnet, daß** das schlauchförmige Gurtband von den äußeren Faltkanten (12) ausgehend in die Nähe einer Gurtmittelachse (10) hin und von hier wieder nach außen zu den äußeren Faltkanten (12) hin mehrfach leporelloartig gefaltet, insbesondere so gefaltet ist, daß sich zwischen den gefalteten Gewebelagen ein Innenraum (5) ergibt.

7. Gurtband nach einem der vorhergehenden Ansprüche, **dadurch gekennzeichnet, daß** das schlauchförmige Gurtband in ausgewählten Bereichen eine ausgewählte Gaspermeabilität aufweist.

8. Gurtband nach einem der vorhergehenden Ansprüche, **dadurch gekennzeichnet, daß** das schlauchförmige Gurtband in ausgewählten Bereichen Abblasöffhungen aufweist.

9. Gurtband nach einem der vorhergehenden Ansprüche, **dadurch gekennzeichnet, daß** das schlauchförmige Gewebe zur Vereinfachung der Faltenbildung (bei der Konfektionierung) in ausgewählten Bereichen, entlang zur Gurtbandlängsachse parallel verlaufender Linien, (vor-)geknickt ist.

10. Verfahren zur Herstellung eines Gurtbands nach einem der vorhergehenden Ansprüche, **gekennzeichnet durch** folgende Schritte:
a) Weben eines zweilagigen schlauchförmigen Gurtbandes mit zwei Weblagen, nämlich einer oberen Weblage und einer unteren Weblage,
i) wobei die Gesarntbruchlast der Kettfäden (43, 44) in mittleren, etwa die Breite eines herkömmlichen Gurtbandes einnehmenden Bereichen der beiden Weblagen des Gurtbandes derjenigen der Kettfäden eines herkömmlichen (Sicherheits-)Gurtbandes entspricht und
ii) die Kettfäden der an die mittleren Bereiche anschließenden Randbereiche und die Schußfäden des Gurtbandes wesentlich feiner als die Kettfäden (43, 44) in den mittleren Bereichen sind,
b) Falten des Gewebes der an die mittleren Bereiche anschließenden Randbereiche um parallel zur Längsrichtung des Gurtbandes verlaufende äußere Faltkanten derart, daß es jeweils zwischen den mittleren Bereichen der oberen und der unteren Weblage zu liegen kommt, und
c) lösbares Verbinden der mittleren Bereiche der oberen Weblage und der unteren Weblage im den äußeren Faltkanten benachbarten Bereich miteinander.

11. Verfahren zur Herstellung eines Gurtbands nach Anspruch 10, **dadurch gekennzeichnet, daß**
a) das schlauchförmige Gewebe in eine im wesentlichen rohrförmige Kammer gebracht wird, deren Innenkontur etwa der Außenkontur des aufgefalteten Gewebes entspricht, wobei die Kammer eine wenigstens bereichsweise gaspermeable Wandung aufweist,
b) in das Gewebe ein ein Beschichtungsmittel tragendes, unter einem Druck Pᵢ stehendes Gas eingebracht wird, während auf der Außenseite der Wandung, also außerhalb der Kammer ein Druck Pₐ herrscht, wobei Pᵢ > Pₐ.

12. Verfahren zur Herstellung eines Gurtbands nach Anspruch 11, **dadurch gekennzeichnet, daß**
a) das schlauchförmige Gewebe, zunächst als (aufgeschnittenes) Flachgewebe, auf eine Unterlage gebracht wird, wobei die Unterlage eine wenigstens bereichsweise gaspermeable Wandung aufweist,
b) auf das Gewebe ein ein Beschichtungsmittel tragendes, unter einem Druck Pₒ stehendes Gas aufgebracht wird, während auf der dem Gewebe abgewandten Seite der Wandung ein Druck Pᵤ herrscht, wobei Pₒ > Pᵤ und
c) das Flachgewebe in die Form eines schlauchförmigen Gewebes gebracht wird.

13. Verfahren nach Anspruch 10 bis 12, zur Herstellung eines Gurtbands nach Anspruch 8, **dadurch gekennzeichnet, daß** das schlauchförmige Gewebe entlang der Linien über heiße Bügelkanten geführt wird.

14. Verfahren nach Anspruch 10 bis 12, zur Herstellung eines Gurtbands nach Anspruch 8, **dadurch gekennzeichnet, daß** das schlauchförmige Gewebe entlang der Linien gefaltet und heiß gebügelt wird.

15. Verfahren nach einem der vorhergehenden Verfahrensansprüche, **dadurch gekennzeichnet, daß** das gewebte Band vor dem Falten beschichtet und "nach links" gewendet wird.

## Claims

1. A two-ply one-part inflatable belt webbing, more particularly for a seat belt, wherein
a) said belt webbing is woven as a tubular belt webbing (2) having two woven plies (41, 42), namely an upper woven ply (42) and a lower woven ply (41),
b) the total rupture capacity of the warp threads (43, 44) handling all of the belt tensile force under load in the middle portions (MB) of said two woven plies (41, 42) of said belt webbing (2) roughly making for the width of a conventional belt webbing corresponds to that of the warp threads of a conventional (seat belt) belt webbing,
c) the warp threads of the edge portions (RB) adjoining said middle portions (MB) handle substantially no belt tensile force and the weft threads of said belt webbing are substantially finer than said warp threads (43, 44) in said middle portions,
d) the fabric of said edge portions (RB) adjoining said middle portions (MB) is folded about outer folding edges oriented parallel to the longitudinal direction of said belt webbing so that said fabric comes to rest in each case between said middle portions of said upper and lower woven ply, and
e) said middle portions of said upper woven ply and of said lower woven ply are releasably joined to each other in the portion adjoining said outer folding edges.

2. The belt webbing as set forth in claim 1 wherein said warp threads of sid edge portions adjoining said middle portions and said weft threads of said belt webbing are roughly half as thick as said warp threads (43, 44) in said middle portions.

3. The belt webbing as set forth in claim 1 or 2, wherein in said portion of said fold edges said warp and weft thread floats exceed or equal 2, resulting in softer edges in said belt webbing when kinked along said edges of said middle portions.

4. The belt webbing as set forth in claim 1, 2 or 3, wherein said belt webbing is coated at least in part in said tube interior and/or exterior.

5. The belt webbing as set forth in any of the claims 1 to 4, wherein special structures are interwoven in said middle portions.

6. The belt webbing as set forth in any of the preceding claims, wherein said tubular belt webbing is fan-folded multiply as of said side edges (12) in the vicinity of a belt centerline (10) and from here returning outwards to said side edges (12), an inner space (5) materializing between said folded fabric plies.

7. The belt webbing as set forth in any of the preceding claims, wherein said tubular belt webbing comprises in selected regions a selected gas-permeability.

8. The belt webbing as set forth in any of the preceding claims, wherein said tubular belt webbing comprises gas exit ports in selected regions.

9. The belt webbing as set forth in any of the preceding claims, wherein to simplify fold formation (in fabrication) said tubular fabric is scored in selected regions along lines oriented parallel to said belt webbing centerline.

10. A method of producing a belt webbing as set forth in any of the preceding claims comprising:
a) weaving a tubular belt webbing having two woven plies, namely an upper woven ply and a lower woven ply,
i) wherein the total rupture capacity of said warp threads (43, 44) in said middle portions of said two woven plies of said belt webbing roughly making for said width of a conventional belt webbing corresponds to that of the warp threads of a conventional (seat belt) belt webbing,
ii) wherein said warp threads of said edge portions adjoining said middle portions and said weft threads of said belt webbing are finer than said warp threads (43, 44) in said middle portions,
b) folding said fabric of said edge portions adjoining said middle portions is folded about outer folding edges oriented parallel to said longitudinal direction of said belt webbing so that said fabric comes to rest in each case between said middle portions of said upper and lower woven ply and
c) releasably joining said middle portions of said upper woven ply and of said lower woven ply in said portion adjoining said outer folding edges.

11. The method of producing a belt webbing as set forth in claim 10, comprising
a) introducing said tubular fabric into a substantially tubular chamber, the inner contour of which roughly corresponds to the outer contour of said fabric when unfolded, said chamber comprising a wall gas-permeable at least regionally,
b) introducing a gas entraining a coating means at a pressure Pᵢ into said structure whilst on said outer side of said wall, i.e. outside of said chamber a pressure Pₐ exists, whereby Pᵢ > Pₐ.

12. A method of producing a belt webbing as set forth in claim 11, comprising
a) applying said tubular fabric initially as a (slitted) flat fabric to a lower ply, said lower ply comprising a gas-permeable wall at least in part,
b) applying to said fabric a gas entraining a coating means at a pressure Pₒ whilst on said side of wall facing away from said fabric a pressure Pᵤ exists, whereby Pₒ > Pᵤ and
c) applying said flat fabric in the form of a tubular fabric.

13. The method as set forth in any of the claims 10 to 12 for producing a belt webbing as set forth in claim 8, comprising guiding said tubular fabric along said lines over hot ironing edges.

14. The method as set forth in any of the claims 10 to 12 for producing a belt webbing as set forth in claim 8, comprising folding said tubular fabric along said lines and hot ironing.

15. The method as set forth in any of the preceding method claims for producing a belt webbing as set forth in any of the claims 4 to 9, comprising coating said woven webbing prior to folding and turning it over "to the left".

## Revendications

1. Sangle d'une pièce gonflable à deux couches, notamment pour une ceinture de sécurité, **caractérisée en ce que**
a) elle est tissée comme sangle en forme de tuyau (2) comportant deux couches tissées (41, 42), à savoir une couche tissée supérieure (42) et une couche tissée inférieure (41),
b) la charge de rupture totale des fils de chaîne (43, 44) absorbant **en cas de sollicitations la force de traction totale de la ceinture** et occupant dans des zones médianes (MB) des deux couches tissées (41, 42) de la sangle (2) environ la largeur d'une sangle traditionnelle, correspond à celle des fils de chaîne d'une sangle (de ceinture de sécurité) traditionnelle,
c) les fils de chaîne n'absorbant **pas essentiellement de force de traction de la ceinture** et se trouvant dans les zones de bord (RB) jouxtant les zones médianes (MB) et les fils de trame de la sangle sont essentiellement plus fins que les fils de chaîne (43, 44) dans les zones médianes,
d) le tissu des zones de bord (RB) jouxtant les zones médianes (MB) est plié autour d'arêtes de pliage extérieures s'étendant parallèlement au sens longitudinal de la sangle de manière à ce que le tissu se couche entre les zones médianes des couches tissées supérieure et inférieure, et
e) les zones médianes de la couche tissée supérieure et de la couche tissée inférieure dans la zone voisine des arêtes de pliage sont reliées entre elles de manière à pouvoir être détachées.

2. Sangle selon la revendication 1, **caractérisée en ce que** les fils de chaîne des zones de bord jouxtant les zones médianes et les fils de trame de la sangle ont une épaisseur d'environ la moitié de celle des fils de chaîne (43, 44) dans les zones médianes.

3. Sangle selon les revendications 1 ou 2, **caractérisée en ce que** dans la zone des arêtes de pliage les flottages de fils de chaîne et de trame sont supérieurs/égaux à 2 dont il résulte des arêtes plus douces de la sangle lorsqu'elle se plie le long des bords des zones médianes.

4. Sangle selon les revendications 1, 2 ou 3, **caractérisée en ce qu'**elle est enduite au moins par zones à l'intérieur du tuyau et/ou à l'extérieur du tuyau.

5. Sangle selon les revendications 1 à 4, **caractérisée en ce que** dans les zones médianes des structures spéciales sont intégrées par tissage.

6. Sangle selon l'une quelconque des revendications précédentes, **caractérisée en ce que** la sangle en forme de tuyau est pliée à plusieurs reprises en va-et-vient à la manière d'un dépliant, partant des arêtes de pliages extérieures (12) jusqu'à proximité d'un axe médian de la ceinture (10) et de là de nouveau vers l'extérieur vers les arêtes de pliage extérieures (12), et est notamment pliée de manière à ce qu'il résulte un espace intérieur (5) entre les couches de tissu pliées.

7. Sangle selon l'une quelconque des revendications précédentes, **caractérisée en ce que** la sangle en forme de tuyau présente en diverses zones sélectionnées une perméabilité au gaz sélectionnée.

8. Sangle selon l'une quelconque des revendications précédentes, **caractérisée en ce que** la sangle en forme de tuyau présente des ouvertures d'échappement dans des zones sélectionnées.

9. Sangle selon l'une quelconque des revendications précédentes, **caractérisée en ce que** le tissu en forme de tuyau est (pré)plié le long de lignes s'étendant parallèlement à l'axe longitudinal de la sangle dans des zones sélectionnées pour simplifier la formation des plis (lors de la confection).

10. Procédé pour la fabrication d'une sangle selon l'une des revendications précédentes, **caractérisé par** les étapes suivantes:
a) tissage d'une sangle en forme de tuyau à deux couches comportant deux couches tissées, à savoir une couche tissée supérieure et une couche tissée inférieure,
i) la charge de rupture totale des fils de chaîne (43, 44) dans des zones médianes des deux couches tissées de la sangle occupant environ la largeur d'une sangle traditionnelle correspondant à celle des fils de chaîne d'une sangle (de sécurité) traditionnelle et
ii) les fils de chaîne des zones de bord jouxtant les zones médianes et les fils de trame de la sangle étant essentiellement plus fins que les fils de chaîne (43, 44) dans les zones médianes,
b) pliage du tissu des zones de bord jouxtant les zones médianes autour d'arêtes de pliage extérieures s'étendant parallèlement au sens longitudinal de la sangle de manière à ce qu'il se couche entre les zones médianes des couches tissées supérieure et inférieure, et
c) liaison réciproque détachable des zones médianes de la couche tissée supérieure et de la couche tissée inférieure dans la zone voisine des arêtes de pliage extérieures.

11. Procédé pour la fabrication d'une sangle selon la revendication 10, **caractérisé en ce que**
a) le tissu en forme de tuyau est placé dans une chambre essentiellement en forme de tube dont le contour intérieur correspondent environ au contour extérieur du tissu déplié, la chambre présentant au moins par zones une paroi perméable au gaz,
b) un gaz sous pression Pᵢ portant un moyen d'enduction est introduit dans le tissu, alors que du côté extérieur de la paroi, donc en dehors de la chambre une pression Pₐ règne, Pᵢ étant >Pₐ.

12. Procédé pour la fabrication d'une sangle selon la revendication 11, **caractérisée en ce que**
a) le tissu en forme de tuyau est posé d'abord comme tissu plat (ouvert) sur une base, la base présentant au moins par zones une paroi perméable au gaz,
b) un gaz étant sous une pression Pₒ portant un moyen d'enduction étant amené sur le tissu, alors que du côté de la paroi détourné du tissu, une pression Pᵤ règne, Pₒ étant > Pᵤ et
c) le tissu plat est mis en forme d'un tissu en forme de tuyau.

13. Procédé selon les revendications 10 à 12 pour la fabrication d'une sangle selon la revendication 8, **caractérisé en ce que** le tissu en forme de tuyau est passé le long des lignes sur des arêtes de repassage chaudes.

14. Procédé selon les revendications 10 à 12 pour la fabrication d'une sangle selon la revendication 8, **caractérisé en ce que** le tissu en forme de tuyau est plié le long des lignes et repassé à chaud.

15. Procédé selon l'une quelconque des revendications précédentes, **caractérisé en ce que** la bande tissée est enduite avant la pliage et tournée à l'envers.
